# EUROPEAN PATENT APPLICATION

(11) **EP 4 503 716 A1**
(43) Date of publication of application: **05.02.2025**
(21) Application number: 24192519.7
(22) Date of filing: 02.08.2024
(51) Int. Cl.: H04W 24/08, G06N 3/08, G06N 20/00

(54) **UE-SIDE DATA COLLECTION WITH RAN AWARENESS FOR WIRELESS COMMUNICATION SYSTEMS**

(30) Priority: 04.08.2023 WO PCT/CN2023/111249; 27.06.2024 CN 202410850661
(71) Applicant: MediaTek Singapore Pte. Ltd., Singapore 138628 (SG)
(72) Inventor: ZHANG, Xiaonan, Beijing (CN); ZHANG, Yuanyuan, Beijing (CN); BI, Hao, San Jose, California (US)
(74) Representative: Pfenning, Meinig & Partner mbB

(57) **Abstract**

Apparatus and methods are provided for data collection with RAN awareness. In one novel aspect, the UE performs data collection with RAN awareness. In one embodiment, the UE receives from the RAN node data collection configuration, which configures AI-ML model related parameters for the UE, performs data collection and delivers the collected AI-ML model related data through the RAN node destined to a UE server. In one embodiment, the UE further receives a data collection request from the RAN node, a core network entity or the UE server. In another novel aspect, the RAN node performs data collection with RAN awareness. In one embodiment, the RAN node accumulates one or more sets of AI-ML model related data collected by one or more other UEs and delivers the one or more sets of AI-ML model related data together with AI-ML model related data collected by the UE.

## Description

### CROSS REFERENCE TO RELATED APPLICATIONS

### TECHNICAL FIELD

The disclosed embodiments relate generally to wireless communication, and, more particularly, to data collection with radio access network (RAN) awareness.

### BACKGROUND

Artificial Intelligence (AI) and Machine Leaning (ML) have been widely used in wireless networks to improve performance, user experience, and reduce complexity/overhead. In the conventional network of the 3rd generation partnership project (3GPP) 5G new radio (NR), by leveraging AI/ML technology to address challenges due to the increased complexity of foreseen deployments over the air interface, both for the network and UEs. Data collection is a crucial step in AI/ML Life cycle management (LCM), which provides the foundation for creating effective and accurate models.

In wireless AI technology, offline training is the most feasible option and serves as the foundation for wireless AI. Regarding User Equipment (UE)-side models, the training can take place on the UE-side or a neutral site. However, it is not practical to perform UE-side model training within the UE due to the lack of a suitable training environment. This includes but is not limited to data availability, storage capacity, computational capacity, and compilation capabilities. For effective offline model training, the data collection solution should be designed to "reach" the UE-side or a neutral site, such as over the top (OTT) server. And a large amount of non-standardized/proprietary data should be collected that can be tailored to various UE internal/external conditions and design choices (e.g., UE resource constraints, radio environment, feature engineering). Besides, the collected data should be sufficient for well model generalization.

Improvements and enhancements are required for data collection with RAN awareness.

### SUMMARY

Apparatus and methods are provided for data collection general framework for AI-ML model training with RAN awareness. General frame is provided for data collection including data collection triggering, data collection configuration, measurements, and data delivery. In one novel aspect, the UE performs data collection with RAN awareness. In one embodiment, the UE receives from the RAN node data collection configuration, which configures AI-ML model related parameters for the UE, performs data collection to collect AI-ML model related data based on the data collection configuration, and performs data delivery for the collected AI-ML model related data through the RAN node destined to a UE server. In one embodiment, the UE further receives a data collection request from the RAN node, a core network entity of the wireless network or the UE server. In one embodiment, the data collection configuration is received from the RAN node together with a data collection request. In another embodiment, the data collection request is received from the UE server or the core network entity after the UE sends a data collection request to the RAN node. In one embodiment, the data delivery is performed using a measurement report procedure. In another embodiment, the data delivery is performed with a new control plane tunnel or with a new application layer tunnel. In one embodiment, the new control plane tunnel between the UE and the RAN node is a layer-1 (L1) uplink control information (UCI), a L2 MAC control element (CE), a radio resource control (RRC) message, or a new radio bearer for AI. In one embodiment, the UE further receives assistance information for the AI-ML model from the RAN node or a core network entity of the wireless network. The assistance information includes one or more elements comprising: use case for the AI-ML model related data, functionality of the AI-ML model related data, scenario information, location information, and RAN configuration information for the AI-ML model related data.

In another novel aspect, the RAN node performs data collection with RAN awareness. In one embodiment, the RAN node receives a trigger event indicating a data collection request for a UE to collect AI-ML model related data, sends data collection configuration to the UE, wherein the data collection configuration configures AI-ML model related parameters for the UE, and performs data delivery for AI-ML model related data collected by the UE through a data delivery tunnel between the UE and a UE server. In one embodiment, the trigger event is a data collection request received from OTT server or from a core network entity of the wireless network, and wherein the data collection request is transferred to the UE. In another embodiment, wherein the trigger event is a data collection request from the UE. In one embodiment, the RAN node delivers assistance information for the AI-ML model to a core network entity of the wireless network. In another embodiment, the RAN node delivers assistance information for the AI-ML model to the UE through a unicast to the UE or through a groupcast to the UE and one or more other UEs. In one embodiment, the RAN node sends an authorization request to the wireless network and receives a response to the authorization request. In yet another embodiment, the RAN node delivers to the OTT server AI-ML model related data collected by the UE together with assistance information for AI-ML model. In one embodiment, the RAN node accumulates one or more sets of AI-ML model related data collected by one or more other UEs and delivers the one or more sets of AI-ML model related data together with AI-ML model related data collected by the UE.

This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 is a schematic system diagram illustrating an exemplary wireless network that supports data collection with RAN awareness in accordance with embodiments of the current invention.
Figure 2 illustrates diagrams for an exemplary process of the data collection to the UE server withRAN awareness in accordance with embodiments of the current invention.
Figure 3 illustrates exemplary diagrams of data collection triggering for UE side data collection with RAN awareness in accordance with embodiments of the current invention.
Figure 4 illustrates exemplary diagrams of assistance information delivery for data collection with RAN awareness in accordance with embodiments of the current invention.
Figure 5A illustrates exemplary diagrams of data collection tunnel and dataflow for data collection with RAN awareness in accordance with embodiments of the current invention.
Figure 5B illustrates exemplary diagrams for sending accumulated dataset to the UE server in accordance with embodiments of the current invention.
Figure 6 illustrates an exemplary overall flow to perform UE side data collection triggered from UE server to RAN node with RAN awareness in accordance with embodiments of the current invention.
Figure 7 illustrates an exemplary overall flow to perform data collection triggered from UE server directly to the UE in accordance with embodiments of the current invention.
Figure 8 illustrates an exemplary overall flow of data collection triggered from the UE server to 5GS with RAN awareness in accordance with embodiments of the current invention.
Figure 9 illustrates an exemplary flow chart for the UE to perform data collection with RAN awareness in accordance with embodiments of the current invention.
Figure 10 illustrates an exemplary flow chart for the RAN node to perform data collection with RAN awareness in accordance with embodiments of the current invention.

### DETAILED DESCRIPTION

Reference will now be made in detail to some embodiments of the invention, examples of which are illustrated in the accompanying drawings.

Several aspects of telecommunication systems will now be presented with reference to various apparatus and methods. These apparatus and methods will be described in the following detailed description and illustrated in the accompanying drawings by various blocks, components, circuits, processes, algorithms, etc. (Collectively referred to as "elements"). These elements may be implemented using electronic hardware, computer software, or any combination thereof. Whether such elements are implemented as hardware or software depends upon the particular application and design constraints imposed on the overall system.

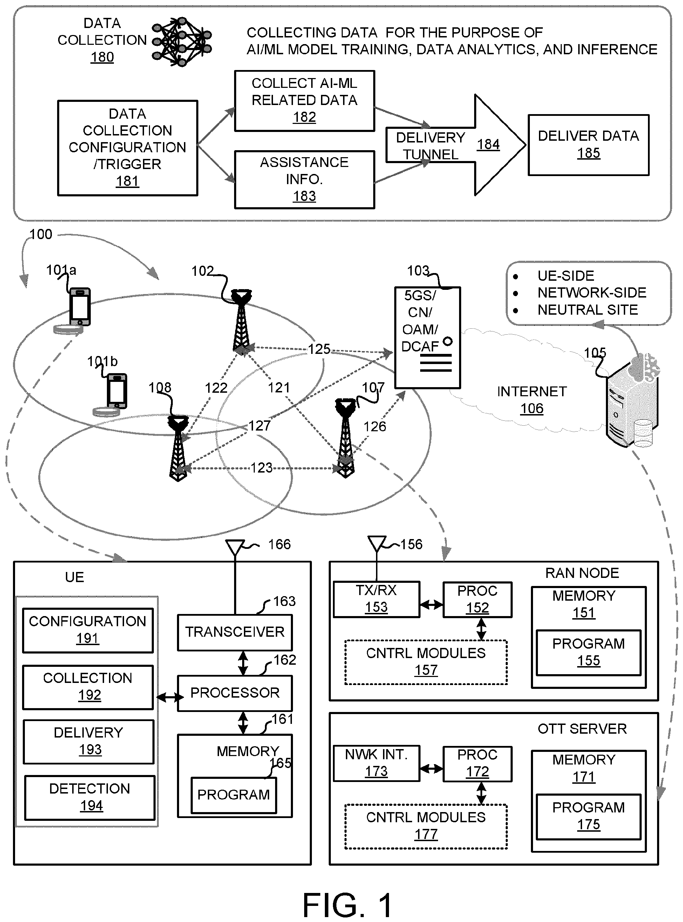

Figure 1 is a schematic system diagram illustrating an exemplary wireless network that supports data collection with RAN awareness in accordance with embodiments of the current invention. Wireless communication network 100 includes one or more fixed base infrastructure units forming a network distributed over a geographical region. The base unit may also be referred to as a radio access network (RAN) node, an access point, an access terminal, a base station, a Node-B, an eNode-B (eNB), a gNB, or by other terminology used in the art. As an example, base stations serve a number of mobile stations within a serving area, for example, a cell, or within a cell sector. In some systems, one or more base stations are coupled to a controller forming an access network that is coupled to one or more core networks. gNB 102, gNB 107 and gNB 108 are base stations in the wireless network, the serving area of which may or may not overlap with each other. gNB 102 is connected with gNB 107 via Xn interface 121. gNB 102 is connected with gNB 108 via Xn interface 122. gNB 107 is connected with gNB 108 via Xn interface 123. Core network (CN) entity 103 connects with gNB 102 and 107, through NG interface 125 and 126, respectively. Network entity CN 109 connects with gNB 108 via NG connection 127. Exemplary CN 103 and CN 109 connect to AI server 105 through internet 106. CN 103 and 109 includes core components such as user plane function (UPF) and core access and mobility management function (AMF). In one embodiment, AI server 105 is a UE server. According to some examples, the UE server can be inside of a mobile network operator (MNO). According to some other examples, the UE server can be outside of the MNO, and it can be also referred to as an over-the-top (OTT) server. In one example, the UE server is a UE-side OTT server. In another example, the UE server is a network-side OTT server or a neutral site OTT server. Please note that some of the following examples are described in the context of OTT server, but they can also be applied to other types of UE server.

Figure 1 further illustrates general data collection framework for the UE(s), the RAN nodes/gNB(s), the CN, and the AI server, such as an OTT server, respectively. CN 103 is the backbone of the wireless network and communicates with the UE server via internet 106. In one embodiment, CN 103 includes the network node/entity/function, such as data collection application function (DCAF), core network (CN), operations, administration, and maintenance (OAM), etc.

In one novel aspect 180, UE performs data collection for AI-ML model. Data collection is a process of collecting data by the network nodes, management entity, UE-side server, or neutral server for the purpose of AI/ML model training, data analytics, and inference. Data collection allows data to reach the UE-side or the neutral site (i.e., UE server), and collect sufficient data for model generalization. At step 181, the UE obtains data collection configuration / trigger. At step 182, the UE collects AI-ML related data. In one embodiment, multiple UEs, such as UE 101a and UE 101b perform AI-ML related data collection and delivers the collected AI-ML related data destined to the UE server 105 through the wireless network. In one embodiment, RAN node, such as gNB 102 accumulates multiple sets of AI-ML model related data from multiple UEs, such as UE 101a and UE 101b and forwards the accumulated dataset through the wireless network 100. In another embodiment, the core network entity receives multiple sets AI-ML model related data collected by multiple UEs, such as UE 101a and UE 101b, and forwards the accumulated dataset to the UE server 105. In one embodiment, the network entity accumulates multiple sets of AI-ML model related data from the same RAN node or from different RAN nodes. At step 184, the UE establishes a data delivery tunnel for the AI-ML related data delivery. At step 185, the UE delivers the AI-ML related data through the established tunnel. In one embodiment, at step 183, the UE obtains the assistance information and delivers the assistance information and the AI-ML related data through the established tunnel. In one novel aspect, the RAN node is awareness of the data collection. The overall UE-side data collection procedure may contain the procedures of data collection triggering, data collection configuration, measurement procedure and data delivery procedure. The data collection triggering usually begins at UE server/OTT server of UE. In one embodiment, the UE server sends the data collection indication to network, and network indicates the data collection to UE. In one embodiment, the UE server sends the data collection indication to UE at application layer, and UE requests the network to initiate the data collection procedure. The data configuration is to indicate the necessary configuration for data collection to UE. In one embodiment, the data configuration can be sent together with the data collection indication by network. Measurement procedure is the procedure for UE to collect enough data for model training. In different embodiments, the measurement procedure, such as self-organizing network (SON)/ minimization of drive tests(MDT), UE measurement report, or new data collection procedure can be used. Data delivery procedure is the way to setup data collection tunnel from UE to the UE server and to deliver the collected data. In different embodiments, the data collection tunnel is at control plane (CP) or user plane (UP). In one embodiment, the network indicates the assistance information to UE server for further use. The assistance information may include use case/functionality the data used for, the scenario information, the site information (location), RAN configuration information for the data, and others.

Figure 1 further illustrates simplified block diagrams of a RAN node / base station, a UE server and a mobile device/UE that supports data collection. The gNB / RAN node has an antenna 156, which transmits and receives radio signals. An RF transceiver circuit 153, coupled with the antenna 156, receives RF signals from antenna 156, converts them to baseband signals, and sends them to processor 152. RF transceiver 153 also converts received baseband signals from processor 152, converts them to RF signals, and sends out to antenna 156. Processor 152 processes the received baseband signals and invokes different functional modules to perform features in RAN node 107. Memory 151 stores program instructions and data 155 to control the operations of the RAN node/base station. The RAN node / base station also includes a set of control modules 157 that carry out functional tasks to communicate with mobile stations. These control modules can be implemented by circuits, software, firmware, or a combination of them.

Figure 1 also includes simplified block diagrams of a UE, such as UE 101a. The UE may also be referred to as a mobile station, a mobile terminal, a mobile phone, a smart phone, a wearable device, an IoT device, a tablet, a laptop, or other terminology used in the art. The UE performs functions perform data collection for AI-ML model training and includes modules of configuration module, collection module, delivery module, and optionally detection module. The UE interacts with gNB through the air interface. The UE has an antenna 166, which transmits and receives radio signals. An RF transceiver circuit 163, coupled with the antenna, receives RF signals from antenna 165, converts them to baseband signals, and sends them to processor 162. RF transceiver 163 also converts received baseband signals from processor 162, converts them to RF signals, and sends out to antenna 165. Processor 162 processes the received baseband signals and invokes different functional modules to perform features in UE 101a. Memory 161 stores program instructions and data 165 to control the operations of UE 101a. Antenna 166 sends uplink transmission and receives downlink transmissions to/from antenna 156 of the base station / gNB.

The UE also includes a set of control modules that carry out functional tasks. These control modules can be implemented by circuits, software, firmware, or a combination of them. Configuration module 191 receives data collection configuration from a radio access network (RAN) node, wherein the data collection configuration configures artificial intelligence - machine learning (AI-ML) model related parameters for the UE. Collection module 192 performs data collection to collect AI-ML model related data based on the data collection configuration. Delivery module 193 performs data delivery for the collected AI-ML model related data through the RAN node destined to a UE server. Detection module 194 receives data collection request from the RAN node, a core network entity of the wireless network or the UE server.

Figure 1 also includes simplified block diagrams of a UE server, such as UE server 105. The UE server has a network interface module 173, which transmits and receives signals / messages through the network. Processor 172 processes the received messages and invokes different functional modules to perform features in the UE server. Memory 171 stores program instructions and data 175 to control the operations of the UE server. The UE server also includes a set of control modules 177 that carry out functional tasks to communicate with mobile stations. These control modules can be implemented by circuits, software, firmware, or a combination of them.

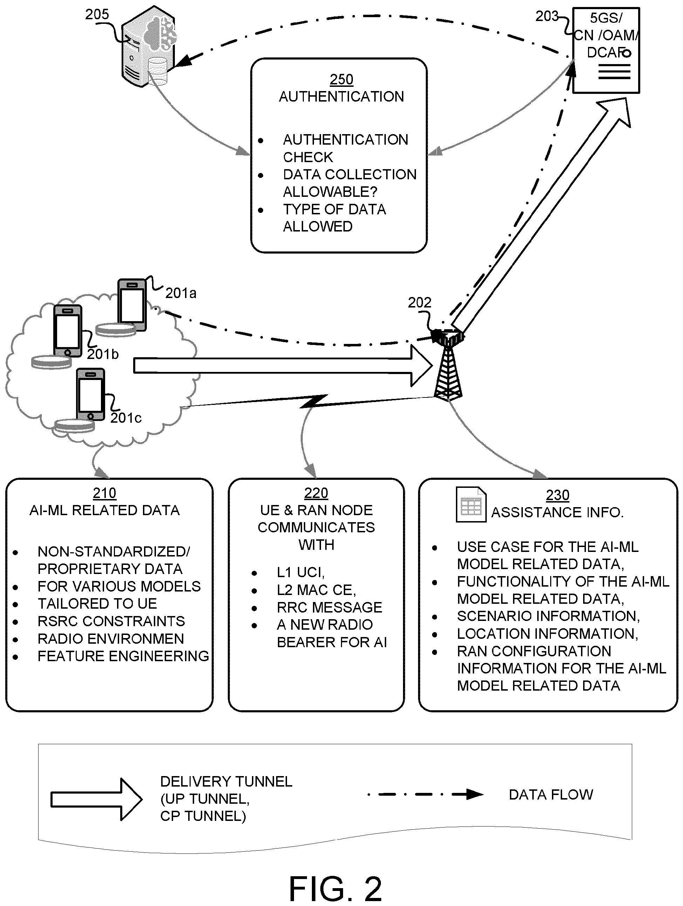

Figure 2 illustrates diagrams for an exemplary process of the data collection to the UE server with RAN awareness in accordance with embodiments of the current invention. One or more UEs, such as UEs 201a, 201b, and 201c, connect with a RAN node/gNB 202. gNB 202 connects with the core network 203. Core network 203 includes network functions and/or entities, such as DCAF, OAM and other network functions/entities. Core network 203 connects with a UE server 205. In one embodiment, the data flows from UE 201a /201b/201c to the UE server 205. In one embodiment, the data is delivered from UE to a network entity/function in CN 203, which forwards the data to the UE server 205. In one embodiment, the data delivery tunnel is the user plane (UP) tunnel. In another embodiment, the data delivery tunnel from the UE to the network entity/function in CN 203 and from the network entity/function in CN 203 to the UE server 205 is through control plane (CP) tunnel. In one embodiment 210, the AI-ML related data collected are non-standardized / standardized / proprietary data for various models tailored to UE internal and/or external conditions and design choices. In one embodiment, the design choices include UE resource constraints, radio environment, and/or feature engineering. In one embodiment, the UE collects AI-ML model related data. The collected data includes one or more elements including model input, model ground-truth, quality of the data, and other information, e.g., AI-ML model related data for AI-ML model generalization. At one embodiment 220, the UE communicates with the RAN node / gNB for data collection configuration and optionally assistance information. The UE and RAN node can communicate through a layer-1 (L1) UCI, a L2 MAC control element (CE), a radio resource control (RRC) message, or a new radio bearer for the AI. In one embodiment 230, assistance information is also delivered to the UE server. The assistance information includes one or more elements comprising use case for the AI-ML model related data, functionality of the AI-ML model related data, scenario information, location information, and RAN configuration information for the AI-ML model related data. In one embodiment 250, authentication is performed for the AI-ML related data delivery. The authentication can be performed by the core network entity/function, the OAM, or the UE server. In one embodiment, the network node/entity/function (e.g., DCAF, CN, OAM, etc.) performs authorization check and determine whether data collection and data delivery to the UE server is allowed or not. In one embodiment, the network node/entity/function (e.g., DCAF, CN, OAM, etc.) also determines what types of data are allowed to be collected and delivered to the UE server.

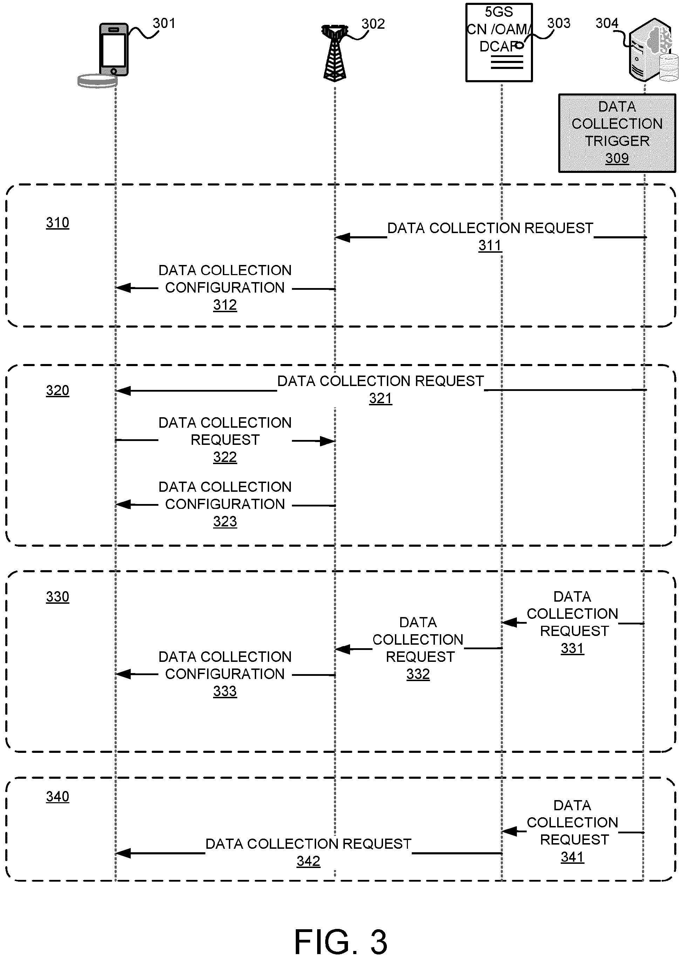

Figure 3 illustrates exemplary diagrams of data collection triggering for UE side data collection with RAN awareness in accordance with embodiments of the current invention. UE 301 connects with RAN node 302 and 5GS / CN 303, which connects with a UE server 304. In one embodiment, the data collection triggering 309 is initiated at the UE server 304. In one novel aspect, the data collection is performed with RAN awareness.

In one embodiment 310, the UE server 304 sends data collection request to RAN node 302 (step 311) and RAN node 302 further delivers the data collection request to UE 301. In one embodiment, the RAN node sends the data collection request and data collection configuration together to UE (step 312). In one embodiment, the data collection request is delivered from RAN node 302 to UE 301 by RRC signaling. In one embodiment, RAN node 302 sends UE the data collection request together with the data collection configuration.

In one embodiment 320, UE server 304 sends data collection indication to UE 301 (step 321). In one embodiment, UE server 304 sends data collection indication/request to UE 301 via application layer. At step 322, upon receiving the data collection indication/request from UE server 304, UE 301 sends data collection request to RAN node 302. At step 323, RAN node 302 sends data collection configuration after receiving data collection request from UE. In one embodiment, the data collection configuration is pre-configured to UE before UE sends data collection request.

In one embodiment 330, at step 331, UE server 304 sends data collection indication/request to 5GS 303. At step 332, 5GS 303 sends data collection indication/request to RAN node 302. At step 333, RAN node 302 delivers data collection indication/request to UE 301. In one embodiment, the function of data collection triggering and assistance information gathering in 5GS is DCAF (Data Collection Application Function). In one embodiment, RAN node 302 sends data collection configuration along with the data collection indication/request to UE 301.

In one embodiment 340, at step 341, UE server 304 sends data collection indication/request to a core network entity of 5GS 303, such as the DCAF. At step 342, the core network entity of 5GS 303, such as the DCAF delivers data collection indication/request to UE 301. In one embodiment, the core network entity of 5GS 303, such as the DCAF delivers data collection indication/request to UE 301 via NAS signaling. In one embodiment, the core network entity of 5GS 303, such as the DCAF further notifies RAN node 302 to send data collection configuration to UE 301. RAN node 302 upon receiving the notification, sends the data collection configuration to UE 301.

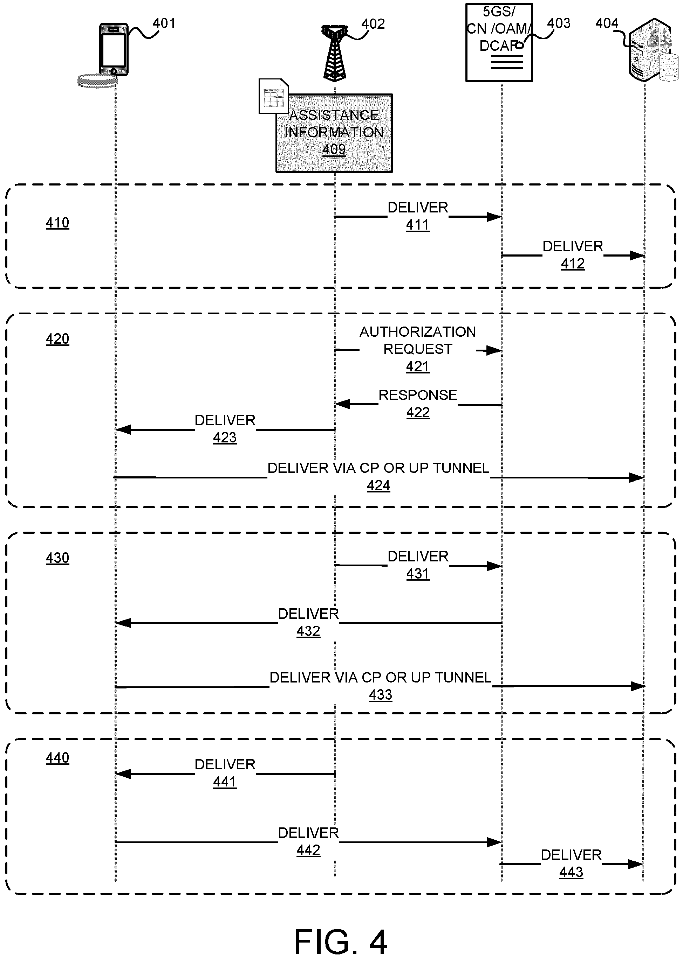

Figure 4 illustrates exemplary diagrams of assistance information delivery for data collection with RAN awareness in accordance with embodiments of the current invention. UE 401 connects with RAN node 402 and 5GS / CN 403, which connects with a UE server 404. In one embodiment, the assistance information 409 is delivered from RAN node 402 to UE server 404. In one embodiment, RAN node 402 provides the assistance information for each UE or for a group of UE. In one embodiment, the assistance information may include use case/functionality the data used for, the scenario information, the site information (location), RAN configuration information for the data, others. In one embodiment, the content of assistance information can rely on UE request or rely on the business agreement between RAN and UE server /OTT server.

In one embodiment 410, at step 411, the assistance information is delivered from RAN node 402 to the core network entity of 5GS 403, such as the DCAF. At step 412, DCAF delivers the assistance information to UE server /OTT server 404 after authorization check. In one embodiment 420, at step 421, RAN node 402 requests the core network entity of 5GS 403, such as the DCAF for authorization. At step 422, RAN node 402 receives authorization response from the core network entity of 5GS 403, such as the DCAF. If the authorization response indicates authorization succeeds, at step 423 RAN node 402 delivers the assistance information to UE 401. At step 424, UE 401 delivers the assistance information to UE server 404. In one embodiment 430, at step 431, RAN node 402 delivers the assistance information to the core network entity of 5GS 403, such as the DCAF. At step 432, the core network entity of 5GS 403, such as the DCAF delivers the assistance information to UE 401 after authorization check. At step 433, UE 401 delivers the assistance information to UE server 404. In different embodiments, UE 401 sends the assistance information to UE server 404 via control plane (CP) tunnel or user plane (UP) tunnel. In one embodiment 440, at step 441, RAN node 402 delivers the assistance information to UE 401. In one embodiment, RAN node 401 requests the core network entity of 5GS 403, such as the DCAF for authorization before sending the assistance information to UE 401. In another embodiment, at step 442, UE 401 delivers the assistance information to the core network entity of 5GS 403, such as the DCAF for authorization check. At step 443, the core network entity of 5GS 403, such as the DCAF delivers the assistance information UE server 404 after the authorization check.

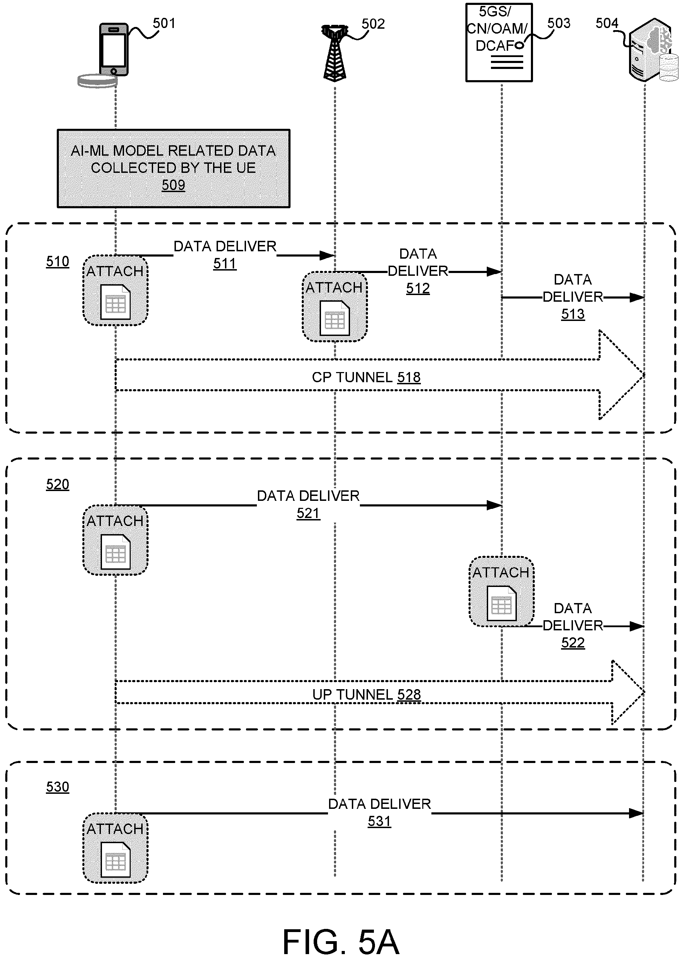

Figure 5A illustrates exemplary diagrams of data collection tunnel and dataflow for data collection with RAN awareness in accordance with embodiments of the current invention. UE 501 connects with RAN node 502 and 5GS / CN 503, which connects with a UE server 504. UE 501 performs data collection to collect AI-ML model related data 509. The dataflow is from UE side to the UE server. In one embodiment, the UE server performs offline model training by the collected data from massive UEs. In one embodiment, In one embodiment, the collected data can be delivered together with assistance information from RAN node to the core network entity of 5GS 503, such as the DCAF.

In one embodiment 510, the data collection tunnel for the collected data is the CP tunnel 518. In one embodiment, a new CP tunnel is established for the AI-ML related data delivery. In one embodiment, the new control plane tunnel between the UE 501 and the RAN node 502 is a layer-1 (L1) uplink control information (UCI), a L2 MAC control element (CE), a radio resource control (RRC) message, or a new radio bearer for AI. At step 511, UE 501 delivers collected data to RAN node 502. Optionally, UE 501 attaches the assistance information to the data delivery. At step 512, RAN node 502 delivers the data 5GS/CN 503. At step 513, 5GS/CN 503 delivers the AI-ML model related data to UE server 504. Optionally, RAN node 502 attaches the assistance information to the data delivery. In one embodiment 520, the data collection tunnel for the collected data is the UP tunnel 528. In one embodiment, at step 521, UE delivers collected data to the network entity of 5GS 503. Optionally, UE 501 attaches the assistance information to the data delivery. In one embodiment, collected data is delivered to the network entity of 5GS 503, such as the DCAF via NAS signaling and the new data collection tunnel is on NAS layer. In one embodiment 530, the collected data is delivered to UE server 504, and the new data collection tunnel is on application layer. At step 531, UE 501 delivers the AI-ML model related data to UE server 504. Optionally, UE 501 attaches the assistance information to the data delivery.

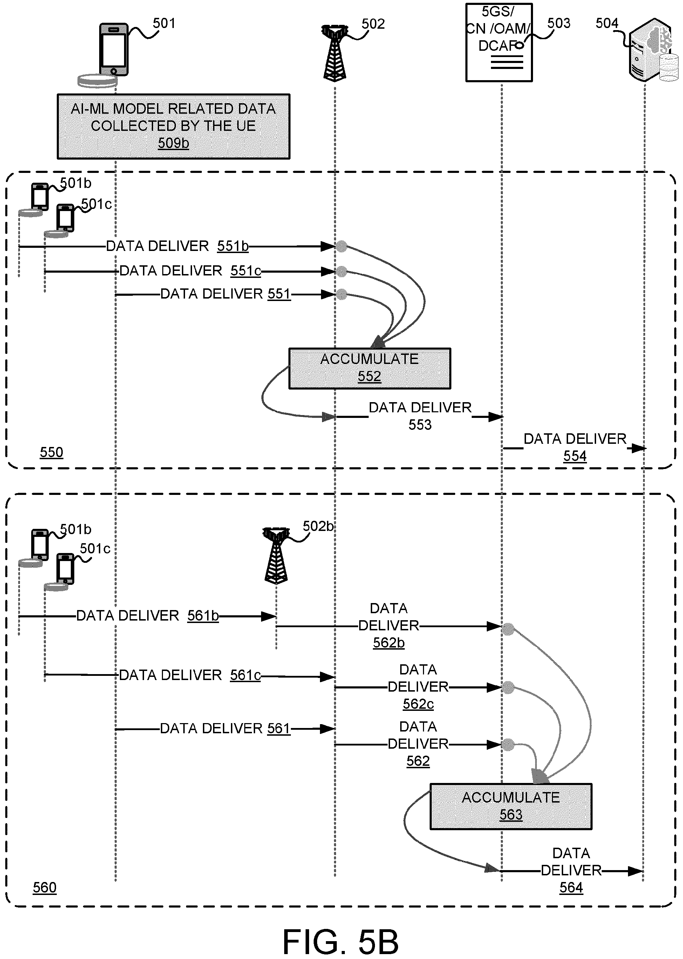

Figure 5B illustrates exemplary diagrams for sending accumulated dataset to the UE server in accordance with embodiments of the current invention. UE 501 connects with RAN node 502 and 5GS / CN 503, which connects with a UE server 504. UE 501 performs data collection to collect AI-ML model related data 509b. In one embodiment 550, AI-ML model related data/ dataset collected by multiple UEs, such as UE 501, UE 501b, and UE 501c, are accumulated and sent to the UE server 504 together. In one embodiment, RAN node 502 accumulates dataset from multiple UEs and sends the accumulated dataset to the UE server 504. At step 551, UE 501 delivers AI-ML model related data to RAN node 502. At step 551b, UE 501b delivers AI-ML model related data to RAN node 502. At step 551c, UE 501c delivers AI-ML model related data to RAN node 502. At step 552, RAN node 502 accumulates multiple AI-ML related data collected by multiple UEs. At step 553, RAN node 502 sends the accumulated dataset to 5GS/CN 503. At step 554, 5GS/CN 503 delivers the accumulated dataset to UE server 504.

In another embodiment 560, 5GS/CN 503 accumulates dataset from multiple UEs, such as UE 501, UE 501b, and UE 501c, and sends the accumulated dataset to the UE server 504. In one embodiment, the multiple sets of AI-ML model related data are from the same RAN node. In another embodiment, the multiple sets of AI-ML model related data are from different RAN nodes. For example, at step 561b, UE 501b sends collected AI-ML related data to RAN node 502b. At step 562b, RAN node 502b delivers the AI-ML related data to 5GS/CN 503. At step 561c, UE 501c sends collected AI-ML related data to RAN node 502. At step 562c, RAN node 502 delivers the AI-ML related data to 5GS/CN 503. At step 561, UE 501 sends collected AI-ML related data to RAN node 502. At step 562, RAN node 502b delivers the AI-ML related data to 5GS/CN 503. At step 563, 5GS/CN 503 accumulates multiple AI-ML related data collected by multiple UEs and at step 564 delivers the accumulated dataset to the UE server 504.

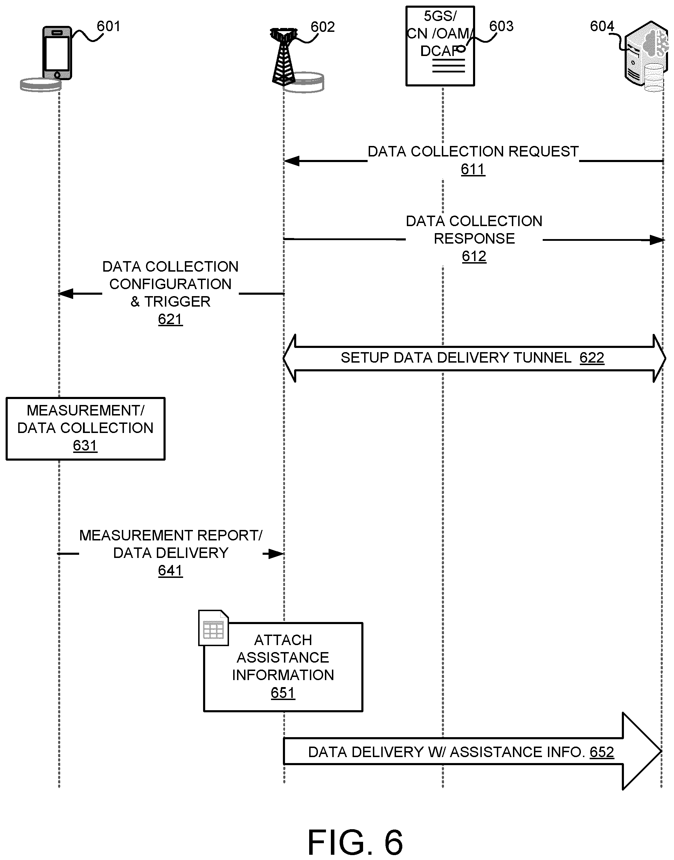

In one novel aspect, the UE receives data collection configuration and triggers, receives assistance information and performs data delivery for the collected AI-ML model related data. As shown in Figures 4-5, there are different options for the data collection configuration and trigger reception, the assistance information reception and the data delivery procedures. The different options for each step can be mixed to perform the data collection with RAN awareness. The following figures, Figures 6-8, illustrate exemplary procedures with different options for each step. Some other mix of options, which are not depicted, can also be used for the data collection.

Figure 6 illustrates an exemplary overall flow to perform UE side data collection triggered from UE server to RAN node with RAN awareness in accordance with embodiments of the current invention. UE 601 connects with RAN node 602 and 5GS / CN 603, which connects with a UE server 604. Before data collection starts, UE server 604 triggers data collection. In one embodiment, at step 611, UE server 604 send data collection request to RAN node 602. At step 612, RAN node 602 may send data collection response to UE server 604. At step 621, RAN node 602 sends data collection trigger/data collection request to UE 601 after receiving data collection request from UE server 604. In one embodiment, RAN node 602 delivers data collection configuration together with data collection request to UE 601. At step 622, the data delivery tunnel may also be setup between RAN node 602 and UE server 604. At step 631 UE 601 measures and collects data. At step 641, UE 601 delivers the collected data to RAN node 602. At step 652, RAN node 602 delivers the collected data to UE server 504. In one embodiment, RAN node 602 combines the collected data and assistance information together and delivers them together to UE server 604. At step 651, RAN node 602 attaches assistance information to the AI-ML model related data to deliver to UE server 604. At step 652, RAN node 602 delivers the AI-ML model related data, optionally with the assistance information, to UE server 604. In one embodiment, the data delivery from UE to RAN is performed via measurement report procedure.

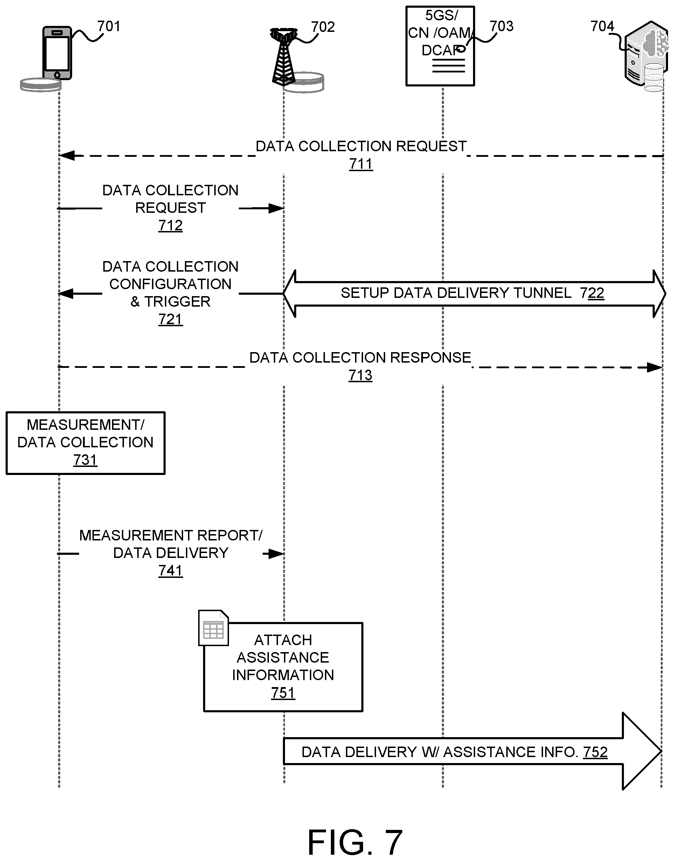

Figure 7 illustrates an exemplary overall flow to perform data collection triggered from UE server directly to the UE in accordance with embodiments of the current invention. UE 701 connects with RAN node 702 and 5GS / CN 703, which connects with a UE server 704. Before data collection starts, the UE server 704 triggers data collection. At step 711, UE server 704 sends data collection request to UE 701 via application layer, as shown in 320. At step 712, UE 701 requests data collection to RAN node 702. After receiving the data collection request, at step 722, RAN node 702 establishes data delivery tunnel to UE server 704. At step 721, RAN mode 702 sends data collection configuration and data collection trigger/request to UE 701. In one embodiment, at step 713, UE 701, optionally, sends data collection response to UE server 704 after receiving the data collection trigger from RAN node. At step 731 UE 701 measures and collects data. At step 741, UE 701 delivers the collected data to RAN node 702. At step 752, RAN node 702 delivers the collected data to UE server 704. In one embodiment, RAN node 702 combines the collected data and assistance information together and delivers them together to UE server 704. Optionally, at step 751, RAN node 702 attaches assistance information to the AI-ML model related data to deliver to UE server 704. At step 752, RAN node 702 delivers the AI-ML model related data, optionally with the assistance information, to UE server 704. In one embodiment, the data delivery from UE to RAN is performed via measurement report procedure.

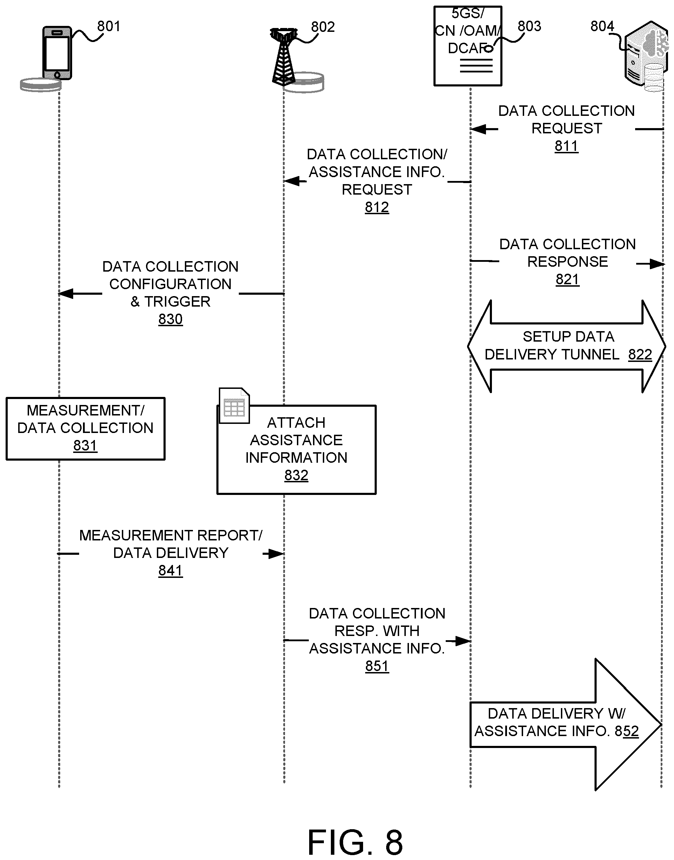

Figure 8 illustrates an exemplary overall flow of data collection triggered from the UE server to 5GS with RAN awareness in accordance with embodiments of the current invention. UE 801 connects with RAN node 802 and 5GS / CN 803, which connects with a UE server 804. Before data collection starts, UE server 804 triggers data collection. At step 811, UE server 804 sends data collection request to a network entity of 5GS 804, such as DCAF. At step 812, 5GS 803 sends the data collection request to RAN node 802. In one embodiment, at step 812, 5GS 803 sends the assistance information request together or separately to RAN node 802. At step 830, RAN node 802 sends data collection triggering/request to UE 801, as shown 330. In one embodiment, RAN node 802 sends data collection configuration along with the data collection request to UE 801. In one embodiment, at step 821, DCAF responds to UE server 804. At step 822, a data delivery tunnel between UE server 804 and DCAF 803 is established. At step 831, UE 801 measures and collects data. At step 841, UE 801 delivers the collected data to RAN node 802. At step 851 RAN node 802 delivers the collected data to DCAF 803, as shown in 510. At step 852, RAN node 802 delivers the AI-ML model related data, optionally with the assistance information, to UE server 804. In one embodiment, at step 832, RAN node 802 combines the collected data and assistance information together and delivers them together to DCAF 803. In one embodiment, DCAF 803 combines the collected data and assistance information of different UEs from RAN and delivers them together to UE server after authorization check. In one embodiment, the assistance information is delivered separately from RAN node 802 to DCAF 803, and from DCAF 803 to UE server 804.

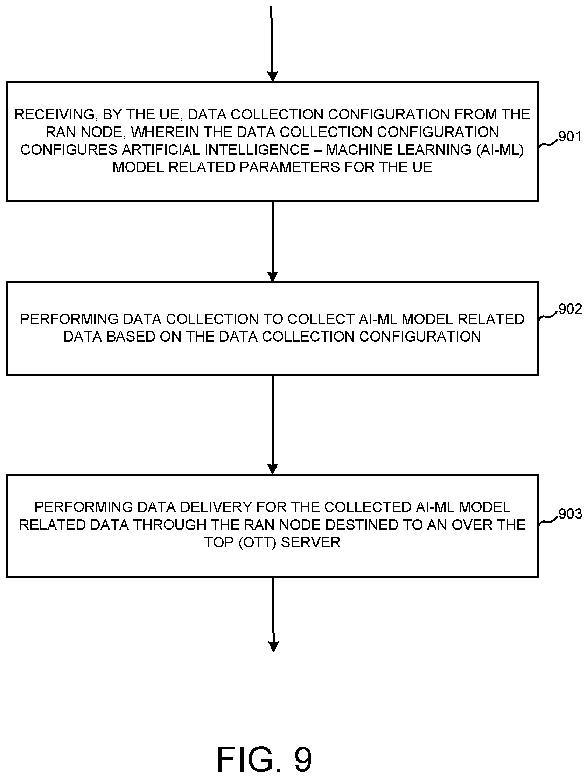

Figure 9 illustrates an exemplary flow chart for the UE to perform data collection with RAN awareness in accordance with embodiments of the current invention. At step 901, the UE receives data collection configuration from the RAN node, wherein the data collection configuration configures artificial intelligence - machine learning (AI-ML) model related parameters for the UE. At step 902, the UE performs data collection to collect AI-ML model related data based on the data collection configuration. At step 903, the UE performs data delivery for the collected AI-ML model related data through the RAN node destined to a UE server.

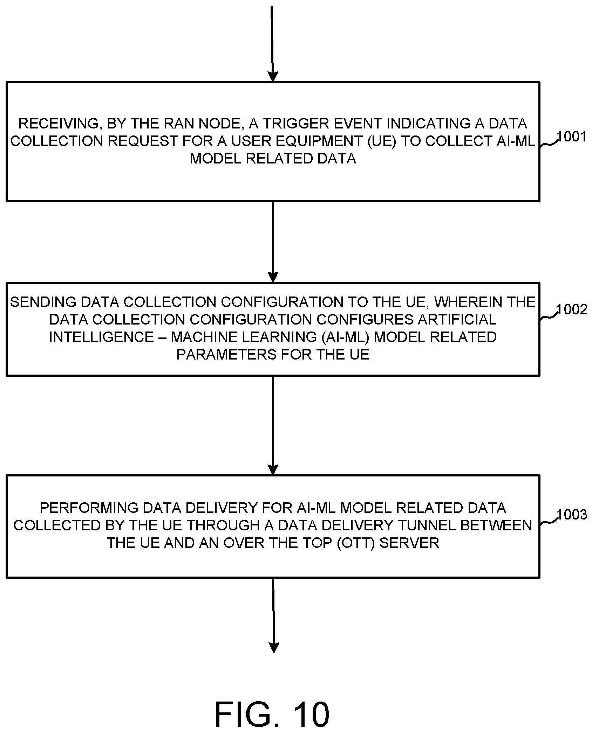

Figure 10 illustrates an exemplary flow chart for the RAN node to perform data collection with RAN awareness in accordance with embodiments of the current invention. At step 1001, the RAN node receives a trigger event indicating a data collection request for a user equipment (UE) to collect AI-ML model related data. At step 1002, the RAN node sends data collection configuration to the UE, wherein the data collection configuration configures artificial intelligence - machine learning (AI-ML) model related parameters for the UE. At step 1003, the RAN node data delivery for AI-ML model related data collected by the UE through a data delivery tunnel between the UE and a UE server.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method for a user equipment (UE) connected with a radio access network (RAN) node in a wireless network, comprising:
receiving, by the UE, data collection configuration from the RAN node, wherein the data collection configuration configures artificial intelligence - machine learning (AI-ML) model related parameters for the UE;
performing data collection to collect AI-ML model related data based on the data collection configuration; and
performing data delivery for the collected AI-ML model related data through the RAN node destined to a UE server.

2. The method of claim 1, further comprising: receiving a data collection request from the RAN node, a core network entity of the wireless network or the UE server.

3. The method of claim 2, wherein the data collection configuration is received from the RAN node together with a data collection request.

4. The method of claim 2, wherein the data collection request is received from the UE server or the core network entity, and the method further comprising: sending a data collection request to the RAN node.

5. The method of claim 1, wherein the data delivery is performed using a measurement report procedure.

6. The method of claim 1, wherein the data delivery is performed with a new control plane tunnel or with a new application layer tunnel.

7. The method of claim 6, wherein the new control plane tunnel between the UE and the RAN node is a layer-1 (L1) uplink control information (UCI), a L2 MAC control element (CE), a radio resource control (RRC) message, or a new radio bearer for AI.

8. The method of claim 1, further comprising: receiving assistance information for the AI-ML model.

9. The method of claim 8, wherein the assistance information includes one or more elements comprising: use case for the AI-ML model related data, functionality of the AI-ML model related data, scenario information, location information, and RAN configuration information for the AI-ML model related data.

10. The method of claim 8, wherein the assistance information is received from the RAN node or a core network entity of the wireless network.

11. A method for a radio access network (RAN) node in a wireless network, comprising:
receiving, by the RAN node, a trigger event indicating a data collection request for a user equipment (UE) to collect artificial intelligence - machine learning (AI-ML) model related data;
sending data collection configuration to the UE,
wherein the data collection configuration configures AI-ML model related parameters for the UE; and
performing data delivery for AI-ML model related data collected by the UE through a data delivery tunnel between the UE and a UE server.

12. The method of claim 11, wherein the trigger event is a data collection request received from the UE server or from a core network entity of the wireless network, and wherein the data collection request is transferred to the UE.

13. The method of claim 12, wherein the data collection request is transferred to the UE together with the data collection configuration.

14. The method of claim 11, wherein the trigger event is a data collection request from the UE;
and/or the method further comprising delivering assistance information for the AI-ML model to a core network entity of the wireless network;
and/or the method further comprising: delivering assistance information for the AI-ML model to the UE through a unicast to the UE or through a groupcast to the UE and one or more other UEs,
the method, for example, further comprising:
sending an authorization request to the wireless network; and
receiving a response to the authorization request;
and/or wherein the RAN node delivers to the UE server AI-ML model related data collected by the UE together with assistance information for AI-ML model;
and/or the method further comprising:
accumulating one or more sets of AI-ML model related data collected by one or more other UEs; and
delivering the one or more sets of AI-ML model related data together with AI-ML model related data collected by the UE.

15. A user equipment (UE), comprising:
a transceiver that transmits and receives radio frequency (RF) signal in a wireless network;
a configuration module that receives data collection configuration from a radio access network (RAN) node, wherein the data collection configuration configures artificial intelligence - machine learning (AI-ML) model related parameters for the UE;
a collection module that performs data collection to collect AI-ML model related data based on the data collection configuration; and
a delivery module that performs data delivery for the collected AI-ML model related data through the RAN node destined to a UE server.
